# EUROPÄISCHE PATENTANMELDUNG

(11) **EP 1 099 613 A1**
(43) Veröffentlichungstag der Anmeldung: **16.05.2001**
(21) Anmeldenummer: 99122311.6
(22) Anmeldetag: 09.11.1999
(51) Int. Cl.: B62D 1/26

(54) **Selbstfahrender Wagen und System mit derartigem selbstfahrenden Wagen**

(71) Anmelder: Gehwolf, Friedrich, 83022 Rosenheim (DE); Kurz, Josef, 83024 Rosenheim (DE)
(72) Erfinder: Kurz, Josef, 80324 Rosenheim (DE)
(74) Vertreter: Grünecker, Kinkeldey, Stockmair & Schwanhäusser Anwaltssozietät

(57) **Zusammenfassung**

Die Erfindung betrifft einen selbstfahrenden Wagen mit einer Lenkeinrichtung, und einem Kopf, der um eine vertikal durch den Wagen verlaufende Achse drehbar gelagert ist. Die Erfindung zeichnet sich dadurch aus, daß der drehbar gelagerte Kopf zur mechanischen Kopplung an eine Leitschiene zur Führung des selbstfahrenden Wagens ausgebildet ist, derart daß der Kopf bei Betrieb des selbstfahrenden Wagens der Leitschiene folgt, und mit der Lenkeinrichtung mechanisch gekoppelt ist, so daß eine durch eine Leitschiene hervorgerufene Drehung des Kopfs um die vertikale Achse eine dem Verlauf der Leitschiene entsprechende Steuerung der Lenkeinrichtung bewirkt. Weiterhin betrifft die Erfindung ein System mit selbstfahrenden Wagen. Dieses System zeichnet sich aus durch wenigstens selbstfahrenden Wagen der oben bezeichneten Art, und eine Leitschiene zur Führung des selbstfahrenden Wagens, wobei der Wagen im Betrieb mit der Leitschiene mechanisch so gekoppelt ist, daß eine durch die Leitschiene verursachte Drehung des Kopfs um die vertikale Achse eine der Leitlinie entsprechende Steuerung der Lenkeinrichtung bewirkt.

## Beschreibung

### Gebiet der Erfindung

Die vorliegende Erfindung betrifft einen selbstfahrenden Wagen mit einer Lenkeinrichtung, und einem Kopf, der um eine vertikal durch den Wagen verlaufende Achse drehbar gelagert ist, und zur mechanischen Kopplung an eine Leitschiene zur Führung des selbstfahrenden Wagens ausgebildet ist, derart daß der Kopf bei Betrieb des selbstfahrenden Wagens der Leitschiene folgt.

Weiterhin betrifft die vorliegende Erfindung ein System mit einem selbstfahrenden Wagen und einer Leitschiene, in welchem beim Betrieb des Wagens der Kopf des Wagens an die Leitschiene gekoppelt ist.

### Stand der Technik

Ein selbstfahrender Wagen und ein System mit einem selbstfahrenden Wagen sind aus der DE 41 19 245 C2 bekannt.

Derartige Wagen können in solchen Systemen als Transportwagen, Staplerwagen, Roboterwagen oder dergleichen vorgesehen werden.

Der in dieser Druckschrift gezeigte Wagen umfaßt weiterhin eine Sensoreinrichtung und eine Steuereinrichtung zur Steuerung der Lenkeinrichtung. Die Sensoreinrichtung erfaßt hierbei die Drehwinkel des Kopfs um die vertikal durch den Wagen verlaufende Achse und gibt diese an eine Steuereinrichtung. Die Steuereinrichtung erzeugt daraufhin ein Signal, durch daß der Wagen derart gelenkt wird, daß er der Leitschiene folgt. Die Sensoreinrichtung und die Steuereinrichtung (einschließlich der Lenkeinrichtung) bilden hierbei einen Regelkreis. Das in dieser Druckschrift gezeigte System umfaßt einen derartigen Wagen und eine Leitschiene.

Nachteil dieses Wagens und des dazugehörigen Systems ist das Erfordernis einer vergleichsweise aufwendigen Steuerung des selbstfahrenden Wagens. Darüber hinaus hat sich in der Praxis gezeigt, daß bei einem derartigen Wagen der durch den Regelkreis aus Sensor und Steuereinrichtung bedingte Istwert/Sollwert-Vergleich dazu führt, daß der Wagen in bezug auf die Längsrichtung der Leitschiene nicht nur eine Längsbewegung sondern auch Querbewegungen ausführt. Demnach ergibt sich insgesamt eine unruhige Fahrt des Wagens.

### Beschreibung der Erfindung

Angesichts dieser Nachteils des Wagens und des Systems gemäß dem Stand der Technik liegt der Erfindung die Aufgabe zugrunde, den bekannten Wagen und das bekannte System zu verbessern.

Insbesondere soll das Vorsehen einer komplizierten Steuerung in Form eines Regelkreises vermieden und eine ruhige Fahrt des Wagens gewährleistet werden.

Diese Aufgabe wird durch einen Wagen der eingangs genannten Art gelöst, der sich dadurch auszeichnet, der drehbar gelagerte Kopf zur mechanischen Kopplung an eine Leitschiene zur Führung des selbstfahrenden Wagens ausgebildet ist, derart daß der Kopf bei Betrieb des selbstfahrenden Wagens der Leitschiene folgt, und mit der Lenkeinrichtung mechanisch gekoppelt ist, so daß eine durch eine Leitschiene hervorgerufene Drehung des Kopfs um die vertikale Achse eine dem Verlauf der Leitschiene entsprechende Steuerung der Lenkeinrichtung bewirkt.

Dadurch daß erfindungsgemäß eine mechanische Kopplung zwischen dem um eine vertikale Achse durch den Wagen drehbar gelagerten Kopf und der Lenkeinrichtung vorgesehen wird, kann jede durch eine Leitschiene bedingte Drehung des Kopfs auf mechanischem Weg direkt auf die Lenkeinrichtung übertragen werden. Hierdurch entfällt gegenüber dem Stand der Technik die Sensoreinrichtung zur Erfassung der Drehung und die Steuereinrichtung zur Erzeugung eines entsprechenden Signals.

Darüber hinaus kann die Lenkeinrichtung durch einfache mechanische Mittel gesteuert werden, so daß die im Stand der Technik erforderliche, durch elektrische Signal steuerbare Lenkeinrichtung vereinfacht werden kann.

Dadurch daß eine mechanische Kopplung zwischen dem Kopf und der Leitschiene vorgesehen ist, und somit der Kopf immer der Leitschiene folgt, werden durch die direkte mechanische Steuerung die Querbewegungen des Wagens in bezug auf die Längsrichtung der Leitschiene verringert, was gegenüber dem Stand der Technik zu einer ruhigeren Fahrt des Wagens führt.

Entsprechend einer vorteilhaften Weiterbildung kann die Lenkeinrichtung eine Vorderradlenkeinheit und/oder eine Hinterradlenkeinheit aufweisen, wobei der drehbar gelagerte Kopf mit der Vorderradlenkeinheit und/oder der Hinterradlenkeinheit mechanisch gekoppelt ist.

Durch diese Maßnahmen kann die Lenkeinrichtung in Abhängigkeit von den Anforderungen des betreffenden Einsatzgebietes optimiert werden.

Die Kombination aus Vorderradlenkeinheit und Hinterradlenkeinheit eignet sich hierbei insbesondere für Lagertransportsysteme, da durch eine derartige Lenkeinrichtung sehr kleine Kurvenradien gefahren werden können. Dies führt insbesondere dazu, daß sich ein mit derartigen Wagen betriebenes System durch verringerten Platzbedarf auszeichnet.

Entsprechend einer vorteilhaften Weiterbildung der zuvor beschriebenen Ausführung können die Vorderradlenkeinheit und/oder die Hinterradlenkeinheit durch jeweils eine Lenkstange mit dem drehbar gelagerten Kopf gekoppelt sein.

Hierdurch kann die mechanische Kopplung zwischen Kopf und Lenkeinrichtung auf einfache Weise realisiert werden. Diese Weiterbildung zeichnet sich demnach durch geringe Herstellungskosten aus.

Falls sowohl eine Vorderradlenkeinheit als auch eine Hinterradlenkeinheit eingesetzt wird, können diese mittels einer Koppelstange mit dem drehbar gelagerten Kopf mechanisch verbunden werden. Diese Koppelstange kann einstückig oder mehrstückig ausgebildet sein. Hierdurch können beide Lenkeinheiten auf besonders einfache Weise miteinander gekoppelt werden, was wiederum zu verringerten Herstellungskosten des erfindungsgemäßen Wagens führt.

Die zuvor beschriebenen Ausbildungen können dahingehend vorteilhaft weitergebildet werden, daß der Kopf drehbar an einem ersten Ende eines Auslegers vorgesehen ist, und das andere Ende des Auslegers drehbar um die vertikale Achse gelagert und mechanisch mit der Lenkeinrichtung gekoppelt ist.

Dadurch daß der Kopf auf einem Ausleger vorgesehen ist, wird eine Bewegung des Kopfs unter Einsatz einer durch die Abmessungen des Auslegers bestimmten Hebelkraft auf die Lenkeinrichtung übertragen. Hierdurch können, bei gleicher mechanischer Kopplung zwischen Kopf und Leitschiene die Lenkkräfte erhöht werden, was, beispielsweise im Fall eines Transportwagens eine erhöhte Beladung des Wagens ermöglicht. Für gleiche Lenkkräfte bedeutet diese Weiterbildung eine geringere Anforderung an die Stärke der mechanischen Kopplung zwischen Kopf und Leitschiene. In diesem Fall kann demnach eine schwächere Kopplung vorgesehen werden, die insgesamt weniger konstruktionellen Aufwand bedeutet und damit kostengünstiger hergestellt werden kann.

In der Ausführung, in der sowohl eine Vorderradlenkeinheit als auch eine Hinterradlenkeinheit vorgesehen ist, kann der Ausleger über eine Welle mit der Koppelstange verbunden sein. Dies ermöglicht eine effiziente Übertragung von Bewegungen des Kopfs auf die Lenkeinrichtung.

Gemäß einer bevorzugten Weiterbildung der zuvor beschriebenen Ausführungen können die Vorderradlenkeinheit und/oder die Hinterradlenkeinheit umfassen: einen zweischenkligen Lenkstockhebel, der drehbar mit dem Wagen verbunden ist, wobei das Ende des einen Schenkels drehbar mit dem Lenkhebel verbunden ist, eine erste Lenkschubstange, deren eines Ende mit dem Ende des anderen Schenkels des Lenkstockhebels drehbar verbunden ist, einen Zwischenhebel, dessen eines Ende drehbar mit dem Wagen verbunden ist, eine zweite Lenkschubstange, deren eines Ende mit dem Zwischenhebel drehbar verbunden ist, eine Spurstange, deren eines Ende drehbar mit dem einen Ende der ersten Lenkschubstange und deren anderes Ende drehbar mit dem einen Ende der zweiten Lenkschubstange verbunden ist, einen ersten Radlenkhebel, dessen eines Ende mit dem anderen Ende der ersten Lenkschubstange drehbar verbunden ist und dessen anderes Ende mit einem ersten um eine vertikale Achse drehbar an dem Wagen befestigtem Rad zur Drehung desselben um diese Achse vorgesehen ist, und einen zweiten Radlenkhebel, dessen eines Ende mit dem anderen Ende der zweiten Lenkschubstange drehbar verbunden ist und dessen anderes Ende mit einem zweiten um eine vertikale Achse drehbar an dem Wagen befestigtem Rad zur Drehung desselben um diese Achse vorgesehen ist.

Durch diese vorteilhafte Weiterbildung kann eine mechanisch sehr einfache, aber dennoch sehr effiziente Lenkeinrichtung geschaffen werden. Diese Lenkeinrichtung zeichnet sich einerseits durch geringe Herstellungskosten aus. Andererseits gewährleistet diese Lenkeinrichtung eine der mechanischen Kopplung zwischen Kopf und Schiene angepaßte Kraftübertragung der Bewegung des Kopfs auf die Lenkeinrichtung.

Falls beispielsweise zur Erhöhung der Beladungsgrenze eines Wagens eine erhöhte Lenkkraft erforderlich ist, kann gemäß einer anderen vorteilhaften Weiterbildung nach dem Kopf eine Kraftverstärkungseinrichtung beispielsweise in Form eines Servomotors, vorgesehen werden.

Gemäß einer bevorzugten Weiterbildung kann der Kopf ein Element aufweisen, das zum Eingriff in die Leitschiene ausgebildet ist, derart, daß das Element entlang der Leitschiene eine Gleitbewegung ausführen kann. Auf diese Weise läßt sich eine besonders einfache und damit kostengünstige mechanische Kopplung mit der Leitschiene realisieren. Hierzu eignen sich insbesondere Elemente, die in Form eines quaderförmigen oder runden Stabes ausgebildet sind.

Darüber hinaus können Kopf und Element vorteilhafterweise auch einstückig ausgebildet werden.

Die obenstehende Aufgabe wird außerdem gelöst durch ein System mit wenigstens einem selbstfahrenden Wagen gemäß einer der zuvor beschriebenen Ausführungen, und einer Leitschiene zur Führung des selbstfahrenden Wagens, wobei der Wagen im Betrieb mit der Leitschiene mechanisch so gekoppelt ist, daß eine durch die Leitschiene verursachte Drehung des Kopfs um die vertikale Achse eine der Leitlinie entsprechende Steuerung der Lenkeinrichtung bewirkt.

Durch Verwendung der zuvor beschriebenen Ausführungen des erfindungsgemäßen Wagen lassen sich in dem erfindungsgemäßen System alle bereits im Zusammenhang mit den verschiedenen Ausführungen des Wagens genannten Vorteile verwirklichen. Zur Vermeidung von Wiederholungen wird an dieser Stelle deshalb lediglich auf die oben stehende Diskussion der einzelnen Ausführungen verwiesen.

Gemäß einer Weiterbildung des erfindungsgemäßen Systems kann die Leitschiene, wenn das Element des Kopfs in Form eines quaderförmigen oder runden Stabes ausgebildet ist, U-förmig ausgebildet sein. Hierdurch läßt sich auch schienenseitig die mechanische Kopplung einfach realisieren.

Entsprechend einer vorteilhaften Ausgestaltung dieses Systems kann die Leitschiene derart im Boden versenkt sein, daß jeweils die Schenkel der U-Form in Richtung des Kopfs zeigen. Da die Leitschienen bündig mit dem Boden vorgesehen sind, wird hierdurch eine Verletzungsgefahr, beispielsweise durch Stolpern über Schienen, vermieden.

Im folgenden werden bevorzugte Ausführungsformen der Erfindung unter Bezugnahme auf die beigefügte Zeichnung beschrieben. In der Zeichnung zeigen:
- Fig. 1: eine Draufsicht auf die Lenkeinrichtung eines selbstfahrenden Wagens gemäß einer Ausführungsform der Erfindung,
- Fig. 2: eine Seitenansicht eines selbstfahrenden Wagens gemäß einer Ausführungsform der Erfindung,
- Fig. 3: eine Ansicht des in Fig. 2 dargestellten Wagens entlang der Linie III-III, und
- Fig. 4: eine Schrägansicht eines Kopfs und einer Leitschiene in einer Ausführungsform eines Systems gemäß der vorliegenden Erfindung.

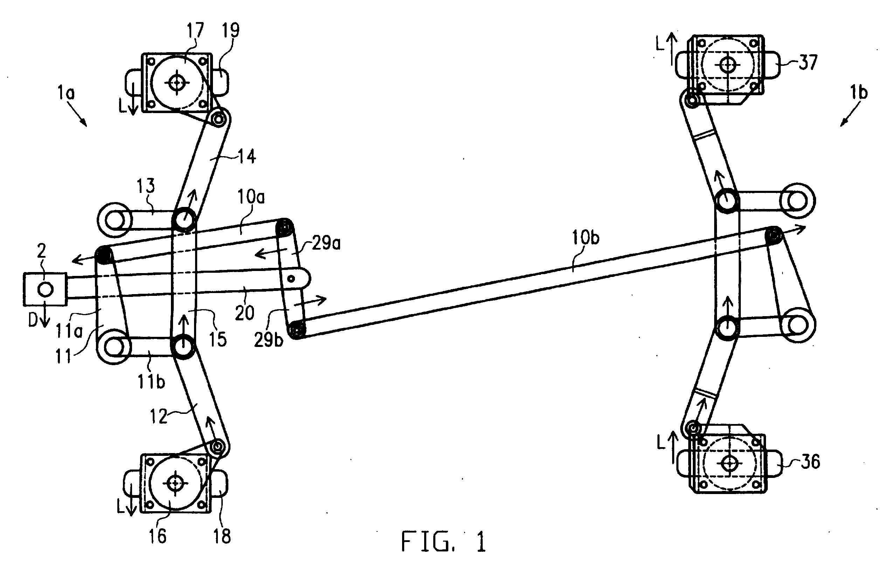

In den Figuren 1, 2 und 3 ist ein Wagen gemäß einer Ausführungsform der vorliegenden Erfindung dargestellt.

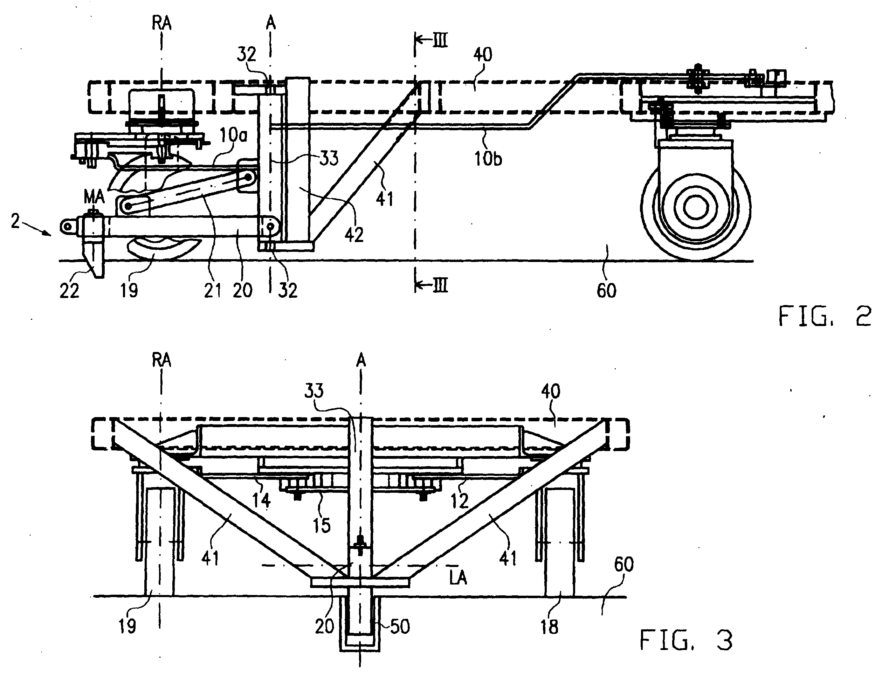

Fig. 1 zeigt hierbei insbesondere eine Draufsicht auf die Lenkeinrichtung des erfindungsgemäßen Wagens. In Fig. 2 ist eine Seitenansicht dieses Wagens dargestellt. In Fig. 3 ist eine Ansicht entlang der Linie III-III in Fig. 2 zu sehen.

Wie insbesondere aus Fig. 2 ersichtlich, umfaßt der erfindungsgemäße Wagen einen Rahmen 40, an dem vier Räder 19 (siehe Fig. 1) um jeweils um eine senkrecht zum Rahmen 40 verlaufende Achse drehbar befestigt sind. In Fig. 2 ist insbesondere das Rad 19 mit seiner vertikalen Drehachse RA dargestellt.

Der Rahmen 40 umfaßt weiterhin eine Haltevorrichtung 41 und 42 für eine drehbare Lagerung eines Kopfs 2 um eine Achse A, die insbesondere in den Figuren 2 und 3 zu sehen ist. Zur drehbaren Lagerung des Kopfs 2 ist eine Welle 33 vorgesehen, die in zwei Lagereinrichtungen 32 drehbar gehaltert ist.

Der Kopf 2 umfaßt ein rundstabförmiges Element 22, das zum Eingriff in eine Leitschiene 50 ausgebildet ist. Entlang der Längsrichtung der Leitschiene 50 kann das Element 22 eine Gleitbewegung ausführen. Auf diese Weise wird eine mechanische Kopplung zwischen Kopf 2 und Leitschiene 50 realisiert.

An der Welle 33 ist ein Ausleger 20 um eine in horizontaler Richtung verlaufende Achse LA (siehe insbesondere Fig. 3) gelagert. An dem anderen Ende des Auslegers 20 ist der Kopf 2 um eine vertikale Achse NA drehbar gelagert. Um den Ausleger 20 und damit den Kopf 2 in einem bestimmten Abstand über den Boden zu halten, ist außerdem eine Verbindungsstange 21 zwischen Ausleger 20 und Welle 33 vorgesehen. Hierdurch wird insbesondere vermieden, daß der Ausleger auf dem Boden aufliegt und somit zu einer erhöhten Reibung zwischen Fahrzeug und Schiene führt.

Dadurch, daß der Ausleger um eine Achse in horizontaler Richtung drehbar an der Welle 33 angebracht ist, kann der Ausleger 20 gegenüber einem Boden bzw. einer Leitschiene 50 (siehe Fig. 3), nach oben bewegt werden und dadurch etwaigen kleinen Hindemissen, die sich in der Leitschiene befinden, ausweichen. So kann eine Störung des Betriebs durch sich in der Leitschiene befindliche Gegenstände vermieden werden. Die Bewegung des Kopfs in vertikaler Richtung kann, insbesondere während des Auftreffens auf das Hindernis noch dadurch unterstützt werden, daß das Element 22 angeschrägt ist.

An der Welle 33 sind zwei Koppelstangen 29a und 29b fest angebracht. An diesen Koppelstangen sind um eine Achse in vertikaler Richtung drehbar eine erste Lenkstange 10a und eine zweite Lenkstange 10b gelagert. Durch diese Lenkstangen werden, bei einer durch den Ausleger 20 bewirkten Drehung der Welle 33, eine Vorderradlenkeinheit 1a und eine Hinterradlenkeinheit 1b betätigt. Da die Vorderradlenkeinheit 1a und die Hinterradlenkeinheit 1b im vorliegenden Fall identisch zueinander aufgebaut sind, wird im folgenden nur die Vorderradlenkeinheit 1a im Detail beschrieben.

Die Vorderradlenkeinheit 1a umfaßt einen zweischenkeligen Lenkstockhebel 11, der um eine vertikale Achse drehbar fest mit dem Rahmen des Wagens verbunden ist. Das Ende des ersten Schenkels ist drehbar mit der Lenkstange 10a verbunden, das Ende des zweiten Schenkels ist drehbar mit einer ersten Lenkschubstange 12 verbunden.

Weiterhin umfaßt die Vorderradlenkeinheit 1a einen Zwischenhebel 13, dessen eines Ende ebenfalls fest um eine vertikale Achse drehbar mit dem Rahmen des Wagens verbunden ist und dessen anderes Ende drehbar mit einer zweiten Lenkschubstange 14 verbunden ist. Wie insbesondere aus Fig. 1 ersichtlich, sind die erste Lenkschubstange 12 und die zweite Lenkschubstange jeweils um eine vertikale Achse 14 drehbar mit einer Spurstange 15 verbunden.

Das andere Ende der Lenkschubstange 12 ist mit einem ersten Radlenkhebel 16 drehbar verbunden. Das andere Ende des ersten Radlenkhebels 16 ist mit einem ersten, um eine vertikale Achse drehbar an dem Wagen befestigten Rad 18 verbunden. Auf gleiche Weise ist das andere Ende der zweiten Lenkschubstange 14 mit einem Radlenkhebel 17 drehbar verbunden. Das andere Ende des zweiten Radlenkhebels 17 ist entsprechend mit einem zweiten, um eine vertikale Achse drehbar an dem Wagen befestigten Rad 19 angeordnet.

Im folgenden wird erläutert, wie durch eine Auslenkung D des mechanisch mit einer Leitschiene 50 gekoppelten Kopfs 2 eine Lenkung L der vier Räder 18, 19, 36 und 37 bewirkt wird.

Hierzu wird angenommen, daß die Leitschiene in Fahrtrichtung eine Krümmung nach links aufweist. Da der Kopf 2 mechanisch an die Leitschiene gekoppelt ist, folgt der Kopf dieser Linkskrümmung der Leitschiene und bewirkt dadurch eine Auslenkung des Auslegers 20 nach links bzw. in der Darstellung in Fig. 1 nach unten. Im folgenden werden die Auslenkungen der einzelnen Komponenten in bezug auf Fig. 1 angegeben.

Dadurch, daß die Koppelstangen 29a und 29b fest mit der Welle 33 verbunden sind, bewirkt die Auslenkung des Auslegers 20 nach unten eine Auslenkung der ersten Koppelstange 29a nach links und der zweiten Koppelstange 29b nach rechts. Demgemäß wird die erste Lenkstange 10a ebenfalls nach links und die zweite Lenkschubstange 10b nach rechts bewegt, wie durch die Pfeile in Fig. 1 angedeutet.

Dadurch, daß der Lenkstockhebel 11 fest um eine vertikale Achse drehbar mit dem Wagen verbunden ist, führt die Linksbewegung der Lenkstange 10a zu einer Bewegung des zweiten Schenkels 11b des Lenkstockhebels 11 nach oben. Gleiches gilt für den Lenkstockhebel der Hinterradlenkeinheit.

Durch die Bewegung des zweiten Schenkels 11 b des Lenkstockhebels 11 nach oben wird die erste Lenkschubstange 12 ebenfalls nach oben bewegt. Weiterhin wird über die Spurstange 15, die ebenfalls nach oben bewegt wird, die zweite Lenkschubstange 14 nach oben bewegt. Gleiches gilt für die beiden Lenkschubstangen der Hinterradlenkeinheit.

Durch die Bewegung der Lenkschubstangen 12 und 14 nach oben werden die beiden Radlenkhebel 16 und 19 ebenfalls nach oben bewegt, wodurch die beiden Räder 18 und 19 in bezug auf ihre vertikale Drehachse nach links ausgelenkt werden.

Auf ähnliche Weise ergibt sich eine Auslenkung der Räder 36 und 37 in bezug auf ihre vertikale Drehachse nach rechts.

Durch geeignete Bemessung der einzelnen Komponenten der Vorderradlenkeinheit 1a und der Hinterradlenkeinheit 1b kann somit eine direkte Lenkung des Wagens in Abhängigkeit von der Auslenkung des Auslegers 20, die ihrerseits durch die mechanische Kopplung des Kopfs 2 an die Leitschiene 50 bedingt ist, realisiert werden.

Dadurch, daß sowohl die Vorderräder als auch die Hinterräder lenkbar sind, kann durch die dargestellte Ausführungsform ein sehr kleiner Kurvenradius realisiert werden.

Bei einem erfindungsgemäßen Wagen mit einer Spurbreite von 750 mm und einem Radstand von 1000 mm, haben sich folgende Abmessungen für die einzelnen Komponenten als günstig erwiesen:
Ausleger 20: 375 mm
erste Koppelstange 29a, zweite Koppelstange 29b: 86 mm
erste Lenkstange 10a: 292 mm
zweite Lenkstange 10b: 954 mm
erster Schenkel 11a des Lenkstockhebels 11: 170 mm
zweiter Schenkel 11b des Lenkstockhebels 11: 130 mm
Winkel zwischen erstem Schenkel 11a und zweitem Schenkel 11b des Lenkstockhebels 11: 97°
erste Lenkschubstange 12, zweite Lenkschubstange 14: 199 mm
Spurstange 15: 234 mm
erster Radlenkhebel 16, zweiter Radlenkhebel 17: 100mm
erster Schenkel des Lenkstockhebels der Hinterradlenkeinrichtung: 166 mm
Winkel zwischen erstem Schenkel und zweitem Schenkel des Lenkstockhebels der Hinterradlenkeinrichtung: 82°
(Die Abmessungen der einzelnen Komponenten sind hierbei jeweils von Drehpunkt zu Drehpunkt angegeben.)

Neben der in den Figuren 1 bis 3 dargestellten Ausführungsform sind eine Vielzahl von Abwandlungen möglich.

Es können zum Beispiel der Kopf und das Element in Form eines einzigen Körpers bzw. Elements ausgebildet sein.

Außerdem können, im Gegensatz zu Fig. 2, die Lenkstangen für die Vorderradlenkeinheit und die Hinterradlenkeinheit in einer Ebene verlaufen. In diesem Fall ist es möglich, die Koppelstange einstückig auszubilden. Weiterhin kann auf die Vorderradlenkeinheit oder die Hinterradlenkeinheit verzichtet werden. Die in diesem Fall realisierten Kurvenradien sind zwar größer als in der Ausführungsform mit zwei Lenkeinheiten, der Wagen erlaubt dann allerdings auch Aufbauten, bei denen kein Platz für eine zweite Lenkeinheit zur Verfügung steht.

Außerdem kann der Kopf direkt an der Welle 33 angebracht werden, d.h. es kann von einem Ausleger 20 abgesehen werden. In diesem Fall entfällt die durch den Ausleger 20 verursachte Hebelwirkung, so daß bei gleicher Ausbildung des Wagens eine größere Kopplungskraft zur Lenkung erforderlich ist. Dementsprechend stärker muß die mechanische Belastbarkeit des Elements und/oder des Kopfs sein. Da einen erhöhte Kopplungskraft zu einer erhöhten Abnutzung des Elements und/oder des Kopfs führt, ist darüber hinaus das Material der durch Reibung belasteten Komponenten entsprechend anzupassen. Eine derartige Ausführungsform läßt sich beispielsweise einsetzen, wenn nur geringe Lasten transportiert werden sollen.

Darüber hinaus ist die in Fig. 1 dargestellte Lenkung nur beispielhaft zu verstehen. Es können selbstverständlich auch andere Lenkmechanismen, bei denen eine Auslenkung eines Kopfs zu einer entsprechenden direkten Lenkung führt, je nach Anwendungsgebiet, eingesetzt werden.

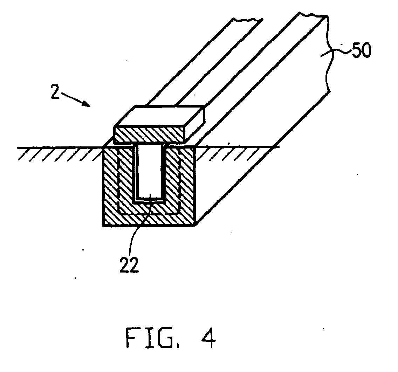

In Fig. 4 ist eine Ansicht eines Kopfs 2 und einer Leitschiene 50 einer Ausführungsform eines Systems gemäß der vorliegenden Erfindung dargestellt.

Der Kopf 2 umfaßt ein stabförmiges Element 22.

Die Leitschiene 50 ist in Form eines U-förmigen Eisens vorgesehen. Wie aus Fig. 4 ersichtlich, ist dieses Eisen bündig im Boden eingelassen. Hierdurch kann eine Verletzungsgefahr durch hervorstehende Schienen vermieden werden.

Der dargestellte Kopf 2 ist vorzugsweise um eine vertikale Achse drehbar am Fahrzeug oder am Ausleger befestigt, so daß er insbesondere einer kurvenförmigen Leitschiene nachfolgen kann, so daß immer eine Kopplung zwischen Kopf und Leitschiene bei minimaler Reibung zwischen beiden Elementen gewährleistet ist. Bei Verwendung eines rundstabförmigen Elements führt eine Lagerung um eine vertikale Achse ebenfalls zu einer verringerten Reibung zwischen Kopf und Leitschiene, da das rundstabförmige Element an der Seite der Leitschiene, an der es bedingt durch die Fahrt des Wagens anliegt, abrollen kann.

Neben der in Figur 4 dargestellten Ausführungsform sind eine Vielzahl von Abwandlungen möglich.

Insbesondere lassen sich ein Vielzahl verschiedener geometrischer Querschnittsformen für den Kopf und die Leitschiene einsetzen. Hierbei muß nur sichergestellt werden, daß das Element eine Gleitbewegung entlang der Leitschiene ausführen kann und der Kopf gegen ein Herausrutschen aus der Schiene in vertikaler Richtung gesichert ist.

## Patentansprüche

1. Ein selbstfahrender Wagen mit
einer Lenkeinrichtung (1a, 1b), und
einem Kopf (2), der um eine vertikal durch den Wagen verlaufende Achse (A) drehbar gelagert ist, und
**dadurch gekennzeichnet, daß**
der drehbar gelagerte Kopf (2) zur mechanischen Kopplung an eine Leitschiene zur Führung des selbstfahrenden Wagens ausgebildet ist, derart daß der Kopf bei Betrieb des selbstfahrenden Wagens der Leitschiene folgt, und
der drehbar gelagerte Kopf (2) mit der Lenkeinrichtung mechanisch gekoppelt ist (3), so daß eine durch eine Leitschiene hervorgerufene Drehung (D) des Kopfs um die vertikale Achse eine dem Verlauf der Leitschiene entsprechende Steuerung (L) der Lenkeinrichtung bewirkt.

2. Der Wagen nach Anspruch 1, in welchem die Lenkeinrichtung eine Vorderradlenkeinheit (1a) und/oder eine Hinterradlenkeinheit (1b) aufweist, und der drehbar gelagerte Kopf (2) mit der Vorderradlenkeinheit und/oder der Hinterradlenkeinheit mechanisch gekoppelt ist.

3. Der Wagen nach Anspruch 2, in welchem die Vorderradlenkeinheit (1a) und/oder die Hinterradlenkeinheit (1b) durch jeweils eine Lenkstange (10a, 10b) mit dem drehbar gelagerten Kopf (2) gekoppelt ist.

4. Der Wagen nach Anspruch 3, in welchem die Lenkstange (10a) für die Vorderradlenkeinheit und die Lenkstange für Hinterradlenkeinheit (10b) mittels einer Koppelstange (29a, 29b) mit dem drehbar gelagerten Kopf (2) mechanisch verbunden sind.

5. Der Wagen nach einem der vorangegangenen Ansprüche, in welchem der Kopf (2) drehbar an einem ersten Ende eines Auslegers (20) vorgesehen ist, und das andere Ende des Auslegers drehbar um die vertikale Achse (A) gelagert ist und mechanisch mit der Lenkeinrichtung (1a, 1b)gekoppelt ist.

6. Der Wagen nach Anspruch 5 in Verbindung mit Anspruch 4, in welchem der Ausleger (20) fest mit der Koppelstange (29a, 29b) verbunden ist.

7. Der Wagen nach einem der Ansprüche 2 bis 6, in welcher jede Lenkeinheit umfaßt:
einen zweischenkligen Lenkstockhebel (11), der drehbar mit dem Wagen verbunden ist, wobei das Ende des einen Schenkels (11a) drehbar mit dem Lenkhebel (10a, 10b) verbunden ist,
eine erste Lenkschubstange (12), deren eines Ende mit dem Ende des anderen Schenkels (11b) des Lenkstockhebels (11) drehbar verbunden ist,
einen Zwischenhebel (13), dessen eines Ende drehbar mit dem Wagen verbunden ist,
eine zweite Lenkschubstange (14), deren eines Ende mit dem Zwischenhebel (13) drehbar verbunden ist,
einen Spurstange (15), deren eines Ende drehbar mit dem einen Ende der ersten Lenkschubstange (12) und deren anderes Ende drehbar mit dem einen Ende der zweiten Lenkschubstange (14) verbunden ist,
einen ersten Radlenkhebel (16), dessen eines Ende mit dem anderen Ende der ersten Lenkschubstange (12) drehbar verbunden ist und dessen anderes Ende mit einem ersten um eine vertikale Achse drehbar an dem Wagen befestigtem Rad (18) zur Drehung desselben um diese Achse vorgesehen ist,
einen zweiten Radlenkhebel (17), dessen eines Ende mit dem anderen Ende der zweiten Lenkschubstange (14) drehbar verbunden ist und dessen anderes Ende mit einem zweiten um eine vertikale Achse drehbar an dem Wagen befestigtem Rad (19) zur Drehung desselben um diese Achse vorgesehen ist.

8. Der Wagen nach einem der vorangegangenen Ansprüche, in welchem nach dem Kopf eine Kraftverstärkungseinrichtung, insbesondere ein Servomotor, vorgesehen ist.

9. Der Wagen nach einem der vorangegangenen Ansprüche, in welchem der Kopf (2) ein Element (22) aufweist, das zum Eingriff in die Leitschiene ausgebildet ist, derart, daß das Element entlang der Leitschiene eine Gleitbewegung ausführen kann.

10. Der Wagen nach Anspruch 9, in welchem das Element in Form eines quaderförmigen oder runden Stabes ausgebildet ist.

11. System umfassend:
wenigstens einen selbstfahrenden Wagen nach einem der vorangegangenen Ansprüche, und
eine Leitschiene (50) zur Führung des selbstfahrenden Wagens, wobei
der Wagen im Betrieb mit der Leitschiene mechanisch so gekoppelt ist, daß eine durch die Leitschiene verursachte Drehung des Kopfs (D) um die vertikale Achse eine der Leitschiene entsprechende Steuerung der Lenkeinrichtung (L) bewirkt.

12. System nach Anspruch 11 in Verbindung mit Anspruch 9 oder 10, in welchem die Leitschiene (50) U-förmig ausgebildet ist.

13. System nach Anspruch 12, in welchem die Leitschiene (50) derart im Boden versenkt ist, daß jeweils die Schenkel der U-Form in Richtung des Kopfs (2) zeigen.
